# EUROPÄISCHE PATENTSCHRIFT

(11) **EP 3 129 193 B1**
(45) Veröffentlichungstag und Bekanntmachung des Hinweises auf die Patenterteilung: **16.10.2019**
(21) Anmeldenummer: 15717114.1
(22) Anmeldetag: 02.04.2015
(51) Int. Cl.: B25J 9/00

(54) **HANDHABUNGSEINRICHTUNG UND HANDHABUNGSVERFAHREN**
MANIPULATION DEVICE AND MANIPULATION METHOD
DISPOSITIF DE MANIEMENT ET PROCÉDÉ DE MANIEMENT

(30) Priorität: 09.04.2014 DE 202014101663 U
(43) Veröffentlichungstag der Anmeldung: 15.02.2017
(73) Patentinhaber: KUKA Systems GmbH, 86165 Augsburg (DE)
(72) Erfinder: STURM, Thomas, 85259 Wiedenzhausen (DE)
(74) Vertreter: Ernicke, Klaus Stefan
(86) Internationale Anmeldenummer: PCT/EP2015/057353
(87) Internationale Veröffentlichungsnummer: WO 2015/155123

(56) Entgegenhaltungen:
- EP-A1- 2 090 506
- EP-A2- 2 631 041
- DE-U1-202004 017 881
- JP-A- S60 219 194

## Beschreibung

Die Erfindung betrifft eine Handhabungseinrichtung und ein Handhabungsverfahren für ein Prozesswerkzeug.

Großformatige Objekte, z.B. Flugzeuge, Autobusse, Eisenbahnwaggons etc. werden in der Praxis manuell lackiert. Es gibt auch Bestrebungen für eine Automatisierung mit Handhabungseinrichtungen, die ein Lackierwerkzeug führen und die an stationären portalartigen Gestellen angeordnet sind.

Aus der EP 2 090 506 A1 sind eine Handhabungseinrichtung und ein Handhabungsverfahren für ein Prozesswerkzeug zum Bearbeiten von Schiffrümpfen bekannt. Das Prozesswerkzeug wird von einem Roboter geführt, der mittels einer Linearachse auf einem Traggestell verfahrbar angeordnet ist. Das Traggestell ist als höhenverstellbare Hubbühne ausgebildet und mit Rädern ausgerüstet. Für die Höhenverstellung des Traggestells sind ein zentraler Scherenlift und endseitige Hydraulikzylinder mit gemeinsamer zentraler Hydraulikversorgung vorgesehen. Ferner sind hydraulische Stabilierungsmittel zur Begrenzung der Hubhöhe vorhanden.

Es ist Aufgabe der vorliegenden Erfindung, eine verbesserte und in den Bewegungsmöglichkeiten optimierte Handhabungstechnik für ein Prozesswerkzeug aufzuzeigen.

Die Erfindung löst diese Aufgabe mit den Merkmalen im Verfahrens- und Vorrichtungshauptanspruch.

Die beanspruchte Handhabungstechnik, d.h. die Handhabungseinrichtung und das Handhabungsverfahren, haben verschiedene Vorteile.

Die Handhabungseinrichtung ist in der Lage, ein oder mehrere Prozesswerkzeuge für die unterschiedlichsten Prozesse an einem Prozessort, insbesondere an einem Werkstück, zu positionieren bzw. zu bewegen. Die Werkstücke und die Prozesse können von beliebiger Art sein. Besondere Vorzüge bestehen bei Auftragprozessen, insbesondere Lackierprozessen. Der Auftrag kann mit hoher Präzision und bahnförmig erfolgen. Die Handhabungseinrichtung eignet sich besonders für großformatige Werkstücke bzw. Objekte, insbesondere Flugzeuge, Autobusse und Eisenbahnwaggons.

Die Handhabungstechnik ist hochflexibel und lässt sich an unterschiedlichste Werkstücke bzw. Objekte anpassen. Die Handhabungseinrichtung ist außerdem mobil und kann sich am Werkstück bzw. Objekt entlang bewegen oder an unterschiedlichen Stellen positionieren. Die Handhabungseinrichtung kann außerdem zu unterschiedlichen Einsatzorten transportiert und dort mit relativ geringem Aufwand aufgebaut und an dem jeweiligen Einsatzzweck angepasst werden. Besondere Vorteile bestehen für einen sogenannten Paintshop, der mobil sein kann und mit dem Flugzeuge an unterschiedlichsten Orten weltweit bedarfsweise nachlackiert werden können. Die Handhabungstechnik kann auch bei der Herstellung von Flugzeugen oder anderen Werkstücken bzw. Objekten eingesetzt werden.

Die beanspruchte Handhabungseinrichtung weist mehrere, insbesondere zwei kooperierende Handhabungseinheiten auf, die gemeinsam einen Träger halten und mit abgestimmten Bewegungen führen, wobei das Prozesswerkzeug (3) an dem Träger (16) beweglich angeordnet ist. Der Träger hat vorzugsweise eine Transporteinrichtung für das Prozesswerkzeug. Das Prozesswerkzeug kann dadurch am Träger entlang bewegt, insbesondere verfahren werden. Die Antriebsenergie für die Bewegung kann aus einem eigenen steuerbaren Antrieb oder aus der Schwerkraft und einer von den Handhabungseinheiten bewirkten Trägerneigung kommen. Die Handhabungseinheiten halten den Träger vorzugsweise an seinen Endbereichen, insbesondere den einander gegenüber liegenden Stirnenden. Die Verbindung zwischen der jeweiligen Handhabungseinheit und dem Träger kann mittels einer Kupplung lösbar sein. Für eine bewegliche Verbindung zwischen Handhabungseinheit und Träger kann ein Anschluss mit einem Gelenk, insbesondere einem Kreuzgelenk, vorhanden sein.

Zum zwängungsfreien Trägertransport kann die Handhabungseinheit eine Ausgleichseinrichtung aufweisen. Diese kann einen zusätzlichen, insbesondere translatorischen Freiheitsgrad bieten. Sie kann z.B. als dreh- und verschiebbarer Anschluss zum Träger oder als Zwischenglied ausgebildet sein.

In einer bevorzugten Ausführungsform weist der Anschluss zwischen einer Handhabungseinheit und dem Träger einen Tragstern auf, an dem der Träger drehbar gelagert ist. Für Ausgleichszwecke kann zusätzlich ein Schiebelager vorhanden sein. Die Zahl und Ausrichtung der Tragsternarme, z.B. zwei, drei, vier oder mehr, bestimmt die vorgegebenen möglichen Drehstellungen. Die jeweilige Drehstellung kann mittels einer steuerbaren Arretierung festgelegt werden. Der Tragstern kann seinerseits über ein Gelenk, insbesondere Kreuzgelenk, mit einer Handhabungseinheit direkt oder ggf. mittelbar über einen zwischengeschalteten Tragarm verbunden werden.

Die Handhabungstechnik lässt sich schnell und einfach an unterschiedliche Größen und Typen von Werkstücken bzw. Objekten, insbesondere an beliebige Flugzeuge, anpassen. Hierbei können unterschiedliche Träger eingesetzt werden, die z.B. verschiedene Längen oder verschiedene Formen haben. Der Träger kann auch von den Handhabungseinrichtungen getrennt und extern abgelegt werden, so dass sich die Handhabungseinrichtungen unabhängig von einander bewegen und unabhängig andere Applikationen bzw. Prozesse durchführen können. Hierfür ist es günstig, wenn die mit einem mehrachsigen und programmierbaren Industrieroboter ausgestatteten Handhabungseinheiten auch wechselbare Werkzeuge nebst Wechselkupplung und Werkzeugablagen aufweisen. Die Handhabungseinrichtungen können außerdem mit einer mitgeführten Versorgungseinrichtung ausgerüstet sein, die sowohl die Handhabungseinheit selbst, als auch den Träger und ein oder mehrere Prozesswerkzeuge nebst eines Transportmittels für die Werkzeugbewegung am Träger versorgt.

Die Handhabungseinrichtungen sind beweglich und können ein Fördermittel beinhalten, das bevorzugt als omnidirektionales Fördergerät ausgebildet ist. Das Fördermittel kann bedarfsweise abgekoppelt werden, so dass mehrere Handhabungseinrichtungen bzw. Handhabungseinheiten sich ein gemeinsames Fördermittel teilen können. Dies verringert wesentlich den Bau- und Kostenaufwand. Ein mehrfach nutzbares Fördermittel ist auch für eine Reduzierung des Geräteumfangs vorteilhaft und vereinfacht den Transport und die Verlagerung der Handhabungseinrichtung zu unterschiedlichen Einsatzorten, insbesondere unterschiedlichen Flughäfen in verschiedenen Ländern. Die abkoppelbaren Fördermittel können außerdem für andere zusätzliche Zwecke eingesetzt werden.

Die Handhabungseinrichtung kann eine Erfassungseinrichtung für Prozessvorgaben, insbesondere für die räumliche Position des Trägers und/oder des Prozesswerkzeugs aufweisen. Dies erlaubt eine kontinuierliche Positions- und Prozessüberwachung, wobei auch das Werkstück bzw. Objekt in die Erfassung und Überwachung eingebunden sein kann. Über die Handhabungseinheiten können beliebige Elastizitäten, z.B. Biegungen des Trägers, innerhalb des gesamten Systems kompensiert und optimale, reproduzierbare Prozessbedingungen geschaffen werden.

Die beanspruchte Handhabungstechnik hat ferner den Vorteil, dass die Systemstabilität und die Prozessqualität in allen mit dem Prozesswerkzeug erreichbaren Positionen sehr hoch ist. Für die Handhabungseinrichtung können erprobte mechanische Standard-Baugruppen eingesetzt werden. Die Prozessqualität kann auch zu Zwecken der Qualitätssicherung überwacht sowie protokolliert und nachgewiesen werden.

Die beanspruchte Handhabungstechnik kann Bestandteil einer Prozesseinrichtung bzw. Prozesstechnik sein. Diese kann mehrere Handhabungseinrichtungen aufweisen, mit denen mehrere gleichartige oder unterschiedliche Prozesse gleichzeitig an verschiedenen Werkstückbereichen oder verschiedenen Werkstücken durchgeführt werden können.

Ein erfindungsgemäßer Teilbereich der beanspruchten Handhabungstechnik ist deren Ausbildung und Einsatz bei der Herstellung oder Erstbearbeitung von Werkstücken im Aerospace-Bereich, insbesondere bei Flugzeugen oder anderen Flugkörpern. Speziell betrifft dies ein Lackieren von Flugzeugen oder anderen Flugkörpern.

Ein anderer erfindungsgemäßer Teilbereich der beanspruchten Handhabungstechnik ist deren Ausbildung und Einsatz bei der Nachbearbeitung oder Nachrüstung von Werkstücken im Aerospace-Bereich, insbesondere bei Flugzeugen oder anderen Flugkörpern. Dies kann einen Lackierprozess an Flugzeugen oder anderen Flugkörpern, insbesondere im Rahmen eines sog. Paintshops, betreffen.

Ein weiterer erfindungsgemäßer Teilbereich der beanspruchten Handhabungstechnik ist deren Ausbildung und Einsatz in beliebigen technischen Bereichen mit Ausnahme des Aerospace-Bereichs. Diese Bereiche werden als Non-Aerospace-Bereiche bezeichnet. Hier können mit der beanspruchten Handhabungstechnik beliebige Prozesse ausgeführt werden. Dies betrifft insbesondere die Bearbeitung, Herstellung oder Ausrüstung von beliebigen Werkstücken (4) oder Objekten im Non-Aerospace-Bereich. Derartige Non-Aerospace-Bereiche können z.B. Verkehrsmittel, insbesondere Land- oder Wasserfahrzeuge, z.B. Straßen- oder Schienenfahrzeuge oder Schiffe sein. Zu den Non-Aerospace-Bereichen zählen auch Rotorfügel von Windrädern, Turbinen- oder Gebläseschaufeln oder dgl.. Außerdem können unbewegliche Gegenstände, insbesondere Gebäude oder andere Immobilien, zu den Non-Aerospace-Bereichen gehören. Dies kann z.B. windbelastete Wände bzw. Fassaden, insbesondere von Hochhäusern, betreffen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1 und 2:: eine Handhabungseinrichtung für ein Prozesswerkzeug in verschiedenen Prozessstellungen an einem Werkstück,
- Figur 3 bis 5:: eine Prozesseinrichtung mit mehreren Handhabungseinrichtungen in verschiedenen Positionen an einem Flugzeug,
- Figur 6:: eine Handhabungseinrichtung mit zwei Handhabungseinheiten und einem Träger beim Transport,
- Figur 7 und 8:: verschiedene Anschlussmöglichkeiten eines Industrieroboters einer Handhabungseinheit an einem Träger mit einer Ausgleichseinrichtung,
- Figur 9 und 10:: eine Variante einer Ausgleichseinrichtung mit Anordnung an einem Industrieroboter und an einer Ablage für den Träger,
- Figur 11 bis 14:: verschiedene Zuordnungsmöglichkeiten eines Prozesswerkzeugs zu einer Handhabungseinheit
- Figur 15:: eine perspektivische Ansicht einer Handhabungseinrichtung
- Figur 16:: eine ausschnittsweise Darstellung eines Trägers, eines Industrieroboters und eines Prozesswerkzeugs und
- Figur 17 bis 19:: eine Variante der Ausgleichseinrichtung in verschiedenen Ansichten.

Die Erfindung betrifft eine Handhabungseinrichtung (2) und ein Handhabungsverfahren. Die Erfindung betrifft ferner eine Prozesseinrichtung (1) mit einer oder mehreren Handhabungseinrichtungen (2) sowie ein zugehöriges Verfahren.

Die Handhabungseinrichtung (2) dient zur Handhabung, insbesondere zur Positionierung und Bewegung eines Prozesswerkzeugs (3) relativ zu einem Werkstück oder Objekt (4). Die Handhabungseinrichtung (2) weist mehrere Handhabungseinheiten (8,9) und einen oder mehrere Träger (16) auf.

Die Handhabungseinrichtung (2) kann ferner eine Erfassungseinrichtung (7) für Prozessvorgaben aufweisen. Die Erfassungseinrichtung (7) kann mehrteilig sein und/oder mehrere Erfassungsfunktionen haben. Sie kann auch mehrfach vorhanden sein. Sie kann auch Bestandteil der Prozesseinrichtung (1) sein.

Das Prozesswerkzeug (3) kann beliebige Prozesse ausführen und kann beliebig ausgebildet sein. In den gezeigten und beschriebenen Ausführungsbeispielen ist dies ein Auftrageprozess für ein fluidisches Medium, insbesondere für einen Lack, wobei das Prozesswerkzeug (3) als Auftragwerkzeug ausgebildet ist. Das Auftragwerkzeug (3) kann z.B. dazu dienen, das fluidische Medium nicht nur auf die Werkstückoberfläche aufzutragen, sondern es dabei auch zu prägen und an der Oberfläche zu profilieren sowie beim Auftrag zu stabilisieren, insbesondere zu befestigen bzw. auszuhärten. Die Profilierung an der Medien- oder Lackoberfläche kann eine Mikrostruktur mit Erhebungen und Vertiefungen aufweisen, die z.B. profilartig längs der Hauptachse oder der Bewegungsrichtung eines als Flugzeug oder anderes Verkehrsmittel oder als Rotorflügel ausgebildeten Werkstücks (4) ausgerichtet sind. Eine solche Mikrostruktur wird auch als Riblet bezeichnet und dient zur Beeinflussung des Luftwiderstands beim Flug und zur Reduzierung des Kraftstoffverbrauchs. Ein solches Auftragwerkzeug (3) kann z.B. gemäß der DE 10 2006 004 644 A1 ausgebildet sein. Bei einem Rotorflügel, z.B. eines Windrads, kann der Wirkungsgrad der Umwandlung der Strömungsenergie in elektrische, mechanische oder sonstige Energie gesteigert werden.

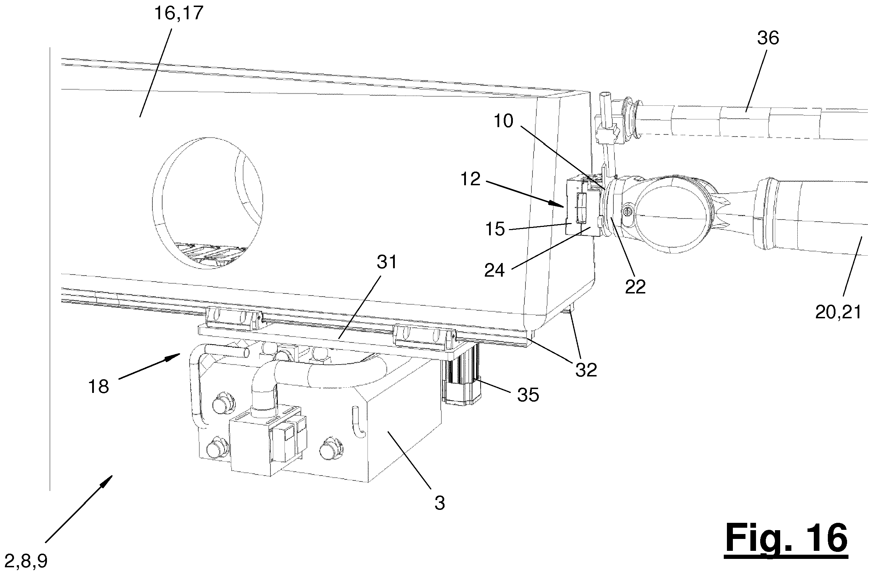

In einer anderen und in Figur 16 dargestellten Ausführungsform kann das Auftragwerkzeug (3) einen drehbar gelagerten, hohlen und formstabilen Stützkörper in Walzen- oder Rohrform aufweisen, der außenseitig von einem Druckluftpolster in einer dichtenden Hülle umgeben ist, wobei auf dem Druckluftpolster eine endlose, ringförmige Matrize mit einem außenseitigen Prägeprofil angeordnet ist, mit dem das aufzutragende fluidische Medium zur Auftragestelle an der Werkstückoberfläche transportiert, dort appliziert und zugleich mit dem Prägeprofil unter Andrückkraft mechanisch profiliert und dabei mittels einer mitgeführten Stabilisierungseinrichtung verfestigt wird. Die Stabilisierungseinrichtung kann z.B. eine Lichtquelle sein, die im Stützkörper angeordnet ist und UV-Licht zum Aushärten durch die entsprechend transpartenten Teile des Stützkörpers, des Druckpolsters und der Matrize zur Auftrage- und Andrückstelle emittiert. Der Stützkörper mit Druckpolster und Matrize wird an die Auftragstele an der Werkstückoberfläche angedrückt und relativ zur Werkstückoberfläche bewegt, wobei die Matrize und die Umhüllung des Druckpolsters biegeelastisch ausgebildet sind, umlaufend abwälzen und sich unter Bildung einer Andrückfläche verformen sowie dabei an die Oberflächenkontur des Werkstücks anpassen. Die Matrize kann durch einen separaten Antrieb am Auftragwerkzeug (3) zusätzlich umlaufend angetrieben werden, was unmittelbar oder mittelbar über das mit innerem Überdruck versehene Druckpolster erfolgen kann.

Andere mögliche Prozesse betreffen eine Inspektion, eine Montage, einen Handling von Bauteilen, eine mechanische oder sonstige Bearbeitung der Werkstückoberfläche, insbesondere in spanabhebender Weise durch Schleifen, Fräsen oder dgl.. Ferner kann ein Prozess in einem Aktivieren oder einem elektrischen Aufladen der Werkstückoberfläche oder des Werkstücks (4) bestehen. Daneben sind beliebige andere Prozesse, z.B. Fügeprozesse mit Schweißen, Löten, Kleben oder dgl., möglich. Das Prozesswerkzeug (3) ist in Adaption an die vorgenannten Prozesse entsprechend ausgebildet.

In einer anderen, nicht dargestellten Variante kann das Prozesswerkzeug (3) als Kleinroboter ausgebildet sein, der ein oder mehrere Roboterglieder und Roboterachsen aufweist und ein Werkzeugselement zum Durchführen eines beliebigen Prozesses trägt. Ein solcher Kleinroboter in Leichtbauweise eignet sich besonders für Handling- und Montageaufgaben. Er kann auch eine integrierte, äußere Belastungen aufnehmende Sensorik und eine programmierbare Robotersteuerung besitzen.

Die Handhabungseinrichtung (2) kann ein oder mehrere und ggf. wechselbare Prozesswerkzeuge (3) aufweisen. Hierbei können ein einzelnes Prozesswerkzeug (3) oder auch mehrere gleiche oder verschiedene Prozesswerkzeuge (3) gleichzeitig im Einsatz sein. Ferner kann ein Werkzeugmagazin vorhanden sein.

Das Werkstück (4) oder Objekt kann beliebig ausgebildet sein. Es kann stationär oder instationär sein. In den gezeigten Ausführungsbeispielen ist das Werkstück (4) als Flugzeug ausgebildet, welches einen Rumpf (5) und Flügel (6) aufweist. In einer anderen Ausführungsform kann das Werkstück (4) ein anderes, ebenfalls großformatiges Verkehrsmittel, z.B. ein Autobus, ein Lastkraftwagen bzw. ein Anhänger, ein Eisenbahnwaggon oder dgl. sein. Das Werkstück (4) kann auch ein kleineres Format haben. Ferner kann das Werkstück (4) ein Gebäude oder ein anderes stationäres Objekt sein.

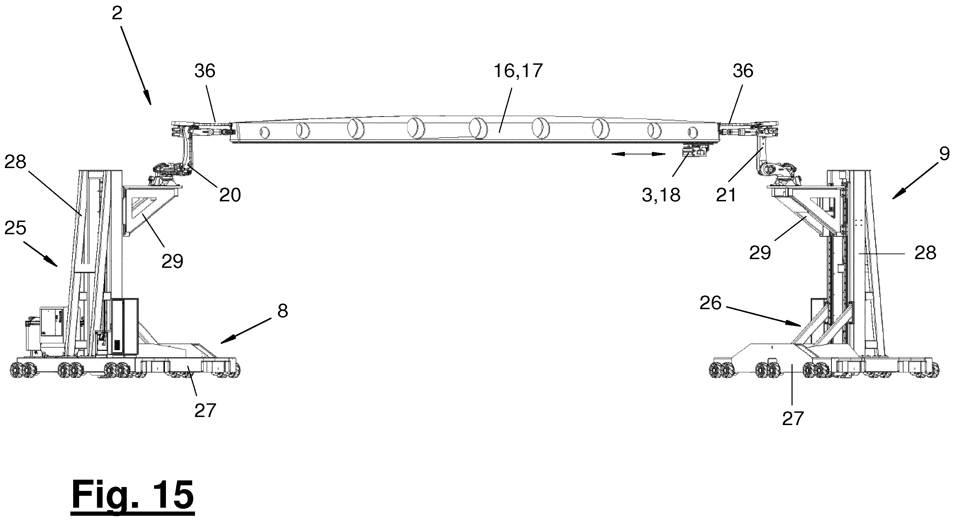

Die Handhabungseinrichtung (2) weist mehrere kooperierende Handhabungseinheiten (8,9) auf, die gemeinsam einen Träger (16) halten und diesen dabei mit abgestimmten Bewegungen führen. Das Prozesswerkzeug (3) ist an dem Träger (16) beweglich angeordnet. In den gezeigten und bevorzugten Ausführungsbeispielen sind zwei Handhabungseinheiten (8,9) vorhanden, die gleich oder ähnlich ausgebildet sein können. Sie sind mit Distanz zueinander angeordnet und halten den Träger (16) an unterschiedlichen Stellen, insbesondere an seinen Rand- oder Endbereichen. Der Träger (16) ist in den gezeigten Ausführungsbeispielen als Tragbalken (17) ausgebildet. Figur 15 zeigt eine konstruktive Ausführungsform einer solchen Handhabungseinrichtung (2).

In Variation zu den gezeigten Ausführungsbeispielen kann die Zahl der Handhabungseinheiten (8,9) größer als zwei sein und z.B. drei, vier oder mehr betragen. Ferner kann der Träger (16) eine andere Formgebung haben und kann z.B. platten- oder rahmenförmig ausgebildet sein, wobei drei oder mehr Handhabungseinheiten (8,9) an verschiedenen Randbereichen des Trägers (16) angreifen.

Das Prozesswerkzeug (3) kann an dem Träger (16) in beliebiger Weise beweglich angeordnet sein. Vorzugsweise ist hierfür eine Transporteinrichtung (18) vorgesehen. An einem Träger (16) können zwei oder mehr Prozesswerkzeuge (3) angeordnet sein, für die eine gemeinsame Transporteinrichtung (18) oder verschiedene getrennte Transporteinrichtungen vorgesehen sind. In den gezeigten und beschriebenen Ausführungsbeispielen bewegen sich die Prozesswerkzeuge (3) entlang einer vorgegebenen Bahn am Träger (16) und führen einen bahnbezogenen Prozess durch. Bei den bevorzugten Auftragwerkzeugen (3) ist dies ein bahnenförmiger Medienauftrag.

Der Träger (16), insbesondere der in den Ausführungsbeispielen gezeigte Tragbalken (17), ist aus einem Leichtbaumaterial hergestellt. Dies kann z.B. aus Carbonfasern mit einem entsprechenden Bindemittel bestehen. Der Tragbalken (17) hat bevorzugt eine gerade oder gegebenenfalls leicht abgewinkelte Erstreckung. Er kann auch an die gegebenenfalls gewölbte Oberflächenkontur des Werkstücks (4) angepasst sein.

Der Tragbalken (17) ist als hohle Kasten- oder Rahmenkonstruktion in biegefester Bauweise mit entsprechenden Verstärkungen ausgeführt. Er kann in seinem hohlen Innenraum Versorgungsleitungen für Betriebsmittel, insbesondere Energie, fluidische Medien, elektrische Leistungs- und Signalströme oder dgl. aufnehmen.

Der Träger (16) weist die besagte Transporteinrichtung (18) für ein oder mehrere Prozesswerkzeuge (3) auf. Die Transporteinrichtung (18) kann in unterschiedlicher Weise ausgebildet sein. Sie weist z.B. ein entlang des Trägers (16) gesteuertes bewegliches Transportmittel (31) mit einer Führung (32) auf. Das Transportmittel (31) kann z.B. als Fahrwagen ausgebildet sein, der an einer Schienenführung (32) entlangbewegt wird. Bei einem Tragbalken (17) kann dies eine gerade oder ggf. gebogene Führung (32) sein. Figur 16 verdeutlicht ausschnittsweise diese Anordnung.

Alternativ können an einem Träger (16) bzw. Tragbalken (17) mehrere Führungen (32) für mehrere getrennt bewegliche Transportmittel (31) vorhanden sein. Die mehreren Führungen (32) können parallel oder schräg bzw. quer zueinander angeordnet sein. In weiterer Abwandlung können an einer Führung (32) mehrere Transportmittel (31) ggf. unabhängig voneinander bewegt werden.

Die Transporteinrichtung (18) weist in den gezeigten Ausführungsbeispielen einen steuerbaren Antrieb (35) für das Transportmittel (31) auf. Die Erfassungseinrichtung (7) kann in diesem Fall auch eine geeignete Sensorik zur Detektion der aktuellen Fahrposition des Transportmittels (31) am Träger (16) aufweisen. Die Erfassungseinrichtung (7) kann ferner eine Sensorik zur Aufnahme von externen Belastungen, insbesondere Kräften und/oder Momenten aufweisen, die beim Prozess auftreten. Dies kann z.B. die Andrückkraft eines Auftragwerkzeugs (3) am Werkstück (4) betreffen.

Der steuerbare Antrieb (35) ist mit der besagten Steuerung, insbesondere Robotersteuerung, verbunden. Er kann in beliebig geeigneter Weise ausgebildet sein. Im gezeigten Ausführungsbeispiel ist er als Riemen- oder Zahnstangenantrieb ausgebildet und weist einen elektrischen Antriebsmotor mit einem Abtriebselement, insbesondere einem Ritzel, und einem damit kämmenden Treibmittel, z.B. einem endlosen Riemen oder einer Zahnstange, auf.

In einer anderen und nicht dargestellten Ausführungsform kann ein eigener steuerbarer Antrieb (35) für das Transportmittel (31) entfallen oder abgeschaltet werden. Das Transportmittel (31) wird in diesem Fall durch Schwerkraft und durch eine von den Handhabungseinheiten (8,9) eingestellte Neigung des Trägers (16) gesteuert bewegt. Das Transportmittel (31) kann dabei eine Bremseinrichtung und ggf. eine Fixierung an der gewünschten Endposition am Träger (16) aufweisen. Eine solche Anordnung kann z.B. in Verbindung mit einem als Kleinroboter ausgebildeten Prozesswerkzeug (3) von Vorteil sein.

Das Transportmittel (31) weist einen Anschluss (34) für das Prozesswerkzeug (3) auf. Hierüber kann eine feste oder lösbare Verbindung geschaffen werden. Der Anschluss (34) kann z.B. als Wechselkupplung ausgebildet sein. Er kann auch eine Ausbildung als Medienkupplung haben, wobei die besagten ein oder mehreren Betriebsmittel vom Träger (16) an das Prozesswerkzeug (3) übertragen werden.

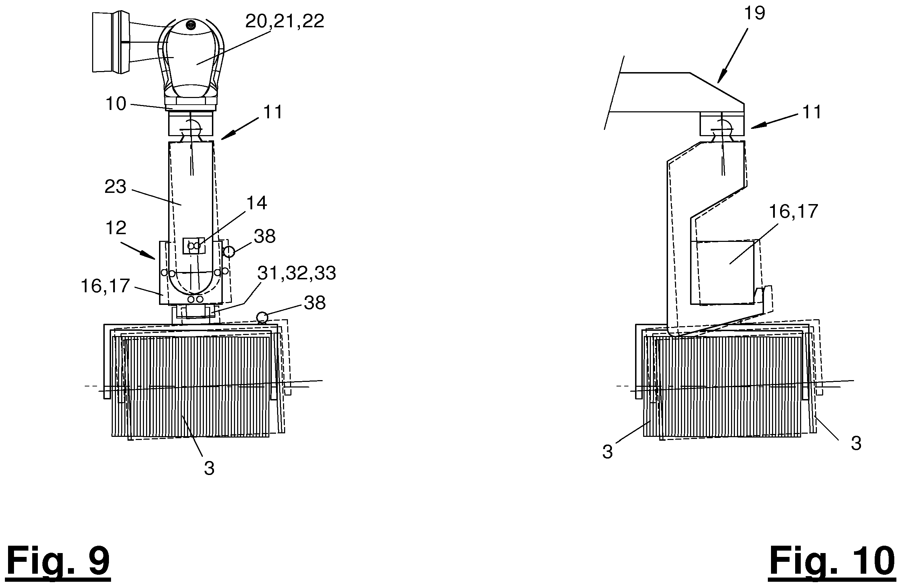

Die Verbindung des Prozesswerkzeugs (3) mit dem Transportmittel (31) kann starr oder beweglich sein. An der Verbindungsstelle, insbesondere am Anschluss (34) kann eine Stelleinrichtung (33) mit einer oder mehreren Stellachsen angeordnet sein. Dies kann z.B. eine in Figur 9 angedeutete Dreheinrichtung sein.

An den Verbindungsstellen zwischen den Handhabungseinheiten (8,9) und dem Träger (16), insbesondere dem Tragbalken (17), ist ein Anschluss (12) angeordnet. In den gezeigten Ausführungsbeispielen halten zwei Handhabungseinheiten (8,9) den Tragbalken (17) an seinen stirnseitigen Endbereichen mittels Anschlüssen (12). Eine oder mehrere Handhabungseinheiten (8,9) weisen dabei eine Kupplung (10) zur lösbaren Verbindung mit dem Träger (16) bzw. mit dem Anschluss (12) auf. Dies kann eine automatische Wechselkupplung sein. Über die Kupplung (10) können außerdem die besagten Betriebsmittel von einer Handhabungseinheit (8,9) an den Träger (16) übertragen werden.

Die Handhabungseinheiten (8,9) können ferner eine Versorgungseinrichtung (30) für die besagten Betriebsmittel mitführen. Die Versorgungseinrichtung (30) kann z.B. eine Energieversorgung, eine Medienversorgung für den Lack oder dgl., für Druckluft,Saugluft, Hydraulikflüssigkeit oder andere Betriebsmedien etc. aufweisen. Sie kann auch weitere Prozessausrüstungen beinhalten. Ferner kann jede Handhabungseinheit (8,9) eine programmierbare Steuerung (nicht dargestellt) aufweisen. Bei den kooperierenden Handhabungseinheiten (8,9) kann eine Handhabungseinheit (8) als Master und die andere(n) Handhabungseinheit(en) (9) als Slave ausgebildet und gesteuert sein.

Die in den Ausführungsbeispielen gezeigten Handhabungseinheiten (8,9) sind bevorzugt gleichartig ausgebildet. Sie weisen jeweils einen mehrachsigen, programmierbaren Industrieroboter (20,21) mit einem Abtriebsglied (22) auf. Der Industrieroboter (20,21) kann mehrere Roboterglieder und mehrere angetriebene Roboterachsen aufweisen. Er kann dabei eine beliebige Zahl und Kombination von rotatorischen und/oder translatorischen Roboterachsen haben. In den gezeigten Ausführungsbeispielen ist der Industrieroboter (20,21) als Gelenkarmroboter oder Knickarmroboter ausgebildet und weist fünf oder mehr Roboterachsen auf. Er besitzt außerdem eine Robotersteuerung (nicht dargestellt). Das Abtriebsglied (22) ist z.B. als Abtriebsflansch ausgebildet und führt eine drehende Abtriebsbewegung aus.

Zumindest eine, vorzugsweise alle Handhabungseinheiten (8,9) weisen eine bewegliche Stützeinrichtung (25,26) für jeweils einen oder mehrere Industrieroboter (20,21) auf. Die Stützeinrichtung (25,26) ist auf dem Untergrund, hier dem Hallenboden, in verschiedenen Richtungen verfahrbar. Sie weist ein Stützgestell (28) mit einem Fördermittel (27) auf. In Einzelfällen kann eine Stützeinrichtung stationär ausgebildet sein.

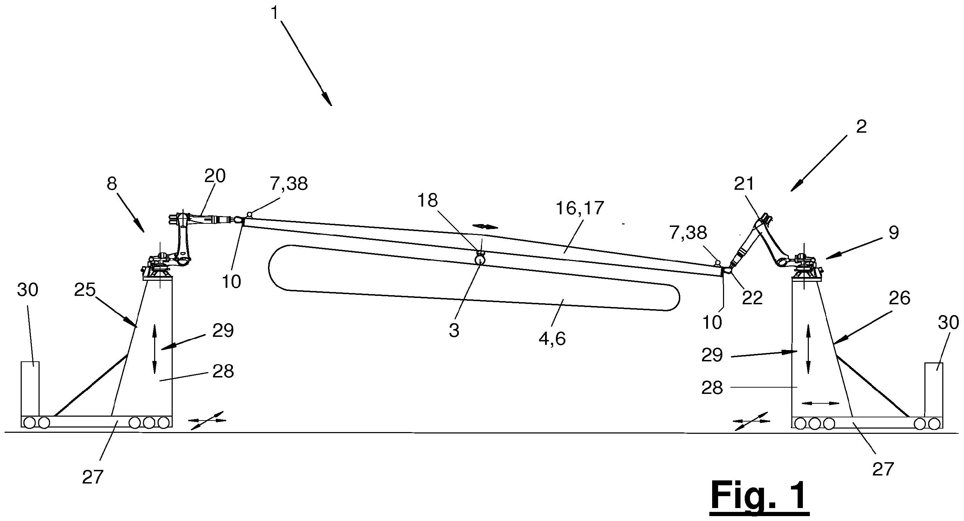

Das Stützgestell (28) kann starr ausgebildet sein. In den gezeigten Ausführungsbeispielen weist es eine Bewegungseinrichtung (29) für die Bewegung des Industrieroboters (20,21) auf. In der Schemadarstellung von Figur 1 ist sie durch Pfeile symbolisiert. Figur 15 zeigt eine konstruktive Ausführungsform. Die Bewegungseinrichtung (29) kann eine oder mehrere Bewegungsachsen aufweisen und ist mit der besagten Steuerung, insbesondere Robotersteuerung, verbunden. Die Bewegungseinrichtung (29) kann insbesondere eine Hubbühne sein, mit der der Industrieroboter (20,21) in der Höhe relativ zum Untergrund verstellt werden kann. Zusätzlich kann noch eine quer dazu gerichtete Bewegungsachse, z.B. ein Kreuzschlitten oder dgl. vorhanden sein.

Das Fördermittel (27) kann in beliebig geeigneter Weise ausgebildet sein. In den gezeigten Ausführungsbeispielen ist es als omnidirektional bewegliches Fördergerät ausgebildet, welches vorzugsweise flurgebunden ist. Ein solches Fördergerät kann entsprechend der EP 2 137 053 B1 ausgebildet sein und mehrere Mecanumräder aufweisen. Es kann lenkbar sein und per Fernsteuerung verfahren werden. Alternativ kann es eigenständig einen vorprogrammierten Fahrweg abfahren und dabei zu Steuerungszwecken sowie zur Kollisionsvermeidung die aktuelle Fahrumgebung erfassen.

Das Fördermittel (27) ist vorzugsweise an der Unterseite des Stützgestells (28) angeordnet. Es kann mit dem Stützgestell (28) fest oder lösbar verbunden sein. Das Stützgestell (28) kann am Einsatzort auf dem Fördermittel (27) oder mit eigenen, ggf. ausfahrbaren Füßen auf dem Untergrund abgestützt sein. Letzteres ist auch der Fall, wenn das Fördermittel (27) abgekoppelt und weggefahren wird.

Das Abtriebsglied (22) des Industrieroboters (20,21) kann in unterschiedlicher Weise mit dem Anschluss (12) eines Trägers (16) bzw. Tragbalkens (17) verbunden sein. Dies kann unmittelbar oder durch Zwischenschaltung eines Auslegers (23) erfolgen. Am Abtriebsglied (22) kann ggf. auch eine Kupplung (10), z.B. eine automatische Wechsel- und Medienkupplung, angeordnet sein. Figur 16 zeigt ferner eine am Industrieroboter (20,21) angeordnete und mit der Medienkupplung (10) verbundene Medienzuführung (36), die ggf. eine Verbindung zu der Versorgungseinrichtung (30) am Stützgestell (28) herstellt.

Der Industrieroboter (20,21) kann den Träger (16) auch loslassen und an geeigneter Stelle, z.B. an einer mitgeführten Ablage (19) ablegen. Er kann dann mittels der Wechselkupplung (10) ein anderes Werkzeug greifen und einen anderen Prozess ausführen. Die Handhabungseinheiten (8,9) können dabei unabhängig voneinander arbeiten und unterschiedliche Prozesse ausführen. Die Handhabungseinheiten (8,9) können zu diesem Zweck auch eine Werkzeugablage bzw. ein Magazin für mehrere Werkzeuge aufweisen, das z.B. am Stützgestell (28) angeordnet ist.

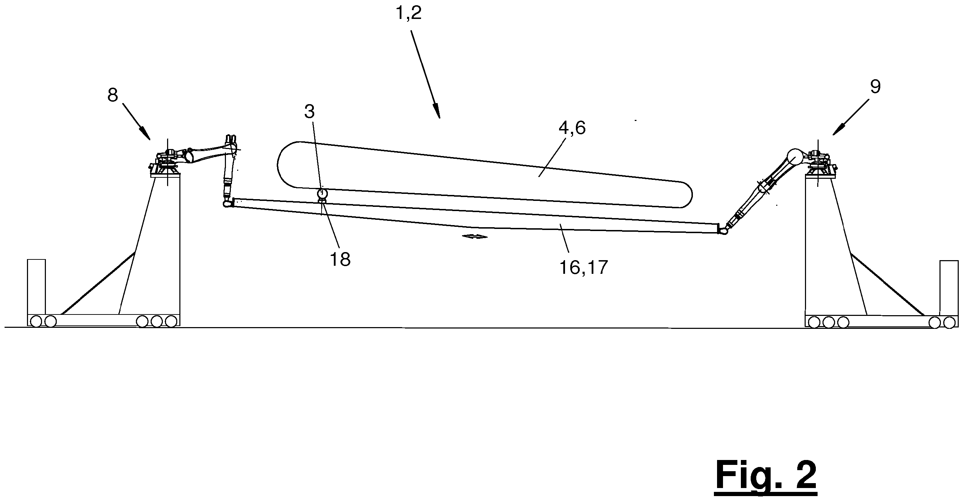

Wie Figur 1 und 2 in einer Schemadarstellung verdeutlichen, kann mit einer Handhabungseinrichtung (2) ein Prozess an unterschiedlichen Seiten eines Werkstücks (4) durchgeführt werden. In Figur 1 sind der Träger (16) und das Prozesswerkzeug (3) oberhalb des Werkstücks (4), hier eines Flugzeugflügels (6), angeordnet und führen den Prozess an dessen Oberseite durch. Dies kann z.B. der besagte Auftrageprozess sein, wobei das fluidische Medium, insbesondere der Lack, in mehreren parallelen und aneinander stoßenden Bahnen aufgetragen wird. Hierdurch kann die gesamte Flügeloberfläche und gegebenenfalls auch deren Randbereich mit dem Medium beschichtet, insbesondere lackiert werden.

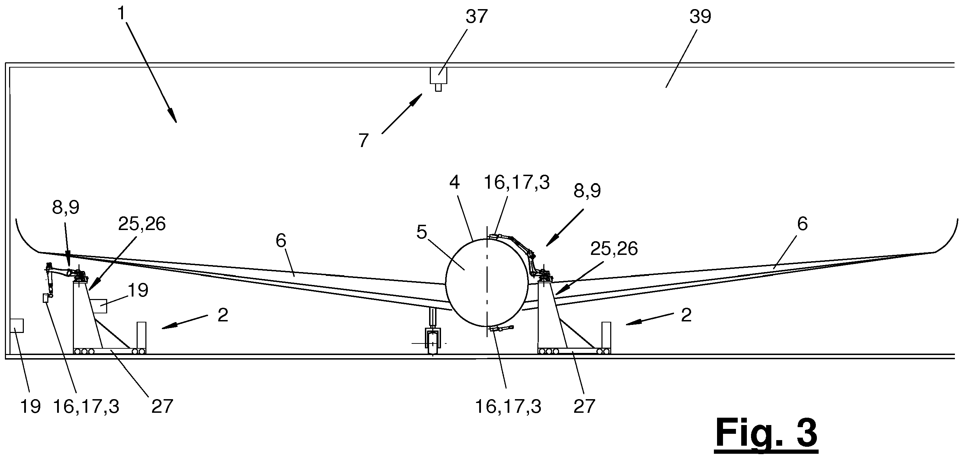

In der Variante von Figur 2 kann mit der gleichen Handhabungseinrichtung (2) ein Prozess an der Unterseite des Werkstücks (4) bzw. Flügels (6) durchgeführt werden. Der Träger (16) und das Prozesswerkzeug (3) sind dabei unterhalb des Flügels (6) sowie in umgedrehter Lage angeordnet und gehalten. Figur 3 bis 5 verdeutlichen andere Einsatzmöglichkeiten, wobei hier auch eine Prozesseinrichtung (1), insbesondere eine Auftrageinrichtung, gezeigt ist, die mehrere Handhabungseinrichtungen (2) umfasst.

In Figur 3 ist z.B. eine Handhabungseinrichtung (2) mit einem Prozess an der Oberseite des Rumpfes (5) eines Flugzeugs (4) beschäftigt. Der Träger (16) und die Handhabungseinheiten (8,9) sind dabei längs des Werkstücks (4) bzw. Rumpfes (5) ausgerichtet bzw. angeordnet. In Figur 3 ist außerdem abgebrochen ein Träger (16) mit einem Prozesswerkzeug (3) an der Unterseite des Rumpfes (5) dargestellt.

Während die eine Handhabungseinrichtung (2) mit einem Prozess beschäftig ist, kann eine andere und in der linken Bildhälfte von Figur 3 dargestellte Handhabungseinrichtung (2) einen anderen Prozess durchführen. Bei den Handhabungseinrichtungen (2) kann ein Träger (16) bzw. Tragbalken (17) nebst Prozesswerkzeug (3) ggf. auch gewechselt werden. Zum Beispiel können für unterschiedliche Prozess- oder Werkstückbereiche unterschiedlich lange Träger (16) bzw. Tragbalken (17) eingesetzt werden.

Zur Aufnahme von ein oder mehreren Trägern (16) bzw. Tragbalken (17) kann eine Ablage (19) vorgesehen sein, die gegebenenfalls auch mehrfach vorhanden ist. In Figur 3 ist einerseits eine stationäre Ablage (19) gezeigt, die z.B. an der Wand einer Halle (39) angeordnet ist. Andererseits kann eine instationäre Ablage (19) an den einander zugeordneten Handhabungseinheiten (8,9) angeordnet sein.

Die Handhabungseinheiten (8,9) können zu Transportzwecken und für Zustellzwecke gemeinsam relativ zum Werkstück (4) bewegt werden. In den gezeigten Ausführungsbeispielen sind die Handhabungseinheiten (8,9) dabei flurgebunden angeordnet und fahren jeweils mit ihrem Fördermittel (27). Alternativ können sie auch in anderer Weise, z.B. hängend angeordnet sein. Die Handhabungseinheiten (8,9) können eine an das Werkstück (4) angepasste Höhe aufweisen, so dass sie z.B. auch unterhalb der Flügel (6) verfahren können. Sie können andererseits auch in der besagten Weise die Ober- und Unterseite sowie die Seitenflächen des Werkstücks (4), insbesondere des Rumpfes (5) und der Flügel (6) für die Prozessdurchführung erreichen.

In Figur 3 ist auch die Erfassungseinrichtung (7) schematisch dargestellt. Sie dient zur Erfassung von Prozessvorgaben. Dies kann einerseits die räumliche Position und Ausrichtung des Trägers (16) und/oder des Prozesswerkzeugs (3) sein. Diese wird von der Erfassungseinrichtung (7) detektiert und anhand der Detektionsergebnisse gegebenenfalls korrigiert. Hierfür kann die Erfassungseinrichtung (7) mit der oder den Handhabungseinrichtungen (2) bzw. deren Handhabungseinheiten (8,9) steuertechnisch verbunden sein.

Die Erfassungseinrichtung (7) arbeitet bevorzugt berührungslos und auf optischen Wege. Sie beinhaltet zum einen eine externe Messeinrichtung (37), die z.B. als Messkamera ausgebildet ist und die am Dach oder an anderer geeigneter Stelle in der Halle (39) angeordnet ist. An einem Träger (16) bzw. einem Tragbalken (17) und/oder an einem Prozesswerkzeug (3) können eine oder mehrere geeignete Messmarken (38) angeordnet sein. Diese sind in Figur 1 und 9 angedeutet. Die Messeinrichtung (37) kann z.B. als Lasertracker ausgeführt sein, wobei die Messmarken (38) als 6D-Probes mit Kugelelementen und entsprechender Platzierung ausgeführt sind.

Die Handhabungseinheiten (8,9) stellen den gemeinsam geführten Träger (16) an der vorgesehenen Prozessstelle am Werkstück (4) zu und positionieren ihn dabei derart, dass das Prozesswerkzeug (3) während seiner Bewegung entlang des Trägers (16) bzw. Tragbalkens (17) die vorgesehenen Prozessbereiche, z.B. die Werkstückoberfläche, in der vorgegebenen Weise erreicht und dort den Prozess durchführen kann. Wenn die Werkstückoberfläche eine von der ebenen Form abweichende Kontur, z.B. eine konvexe oder konkave Wölbung hat, bedarf es ggf. einer Nachführung des Trägers (16) bzw. Tragbalkens (17) in Abhängigkeit von der momentanen Position des Prozesswerkzeugs (3). Dieses Nachführen kann durch die besagte abgestimmte Bewegung der Handhabungseinheiten (8,9) durchgeführt werden. Diese können z.B. den Träger (16) bzw. Tragbalken (17) heben oder senken und auch in seiner Neigung verändern. Hierdurch kann das Prozesswerkzeug (3) an seiner aktuellen Trägerposition in die erforderliche räumliche Zuordnung zur Prozessstelle, insbesondere zur momentan beaufschlagten Werkstückoberfläche, gebracht werden.

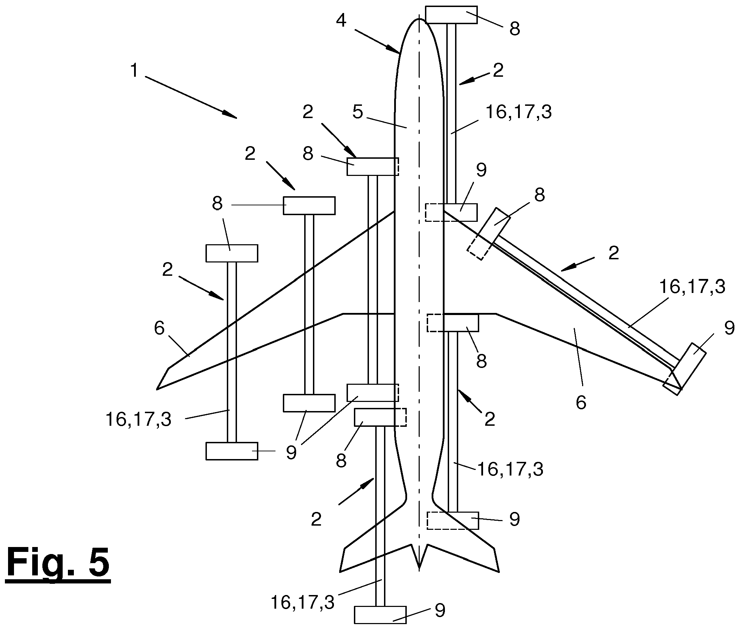

Wie Figur 5 verdeutlicht, kann eine Prozesseinrichtung (1) mehrere, z.B. zwei Handhabungseinrichtungen (2) der genannten Art aufweisen, die jeweils eigenständig den oder die Prozesse an der linken und rechten Werkstück- bzw. Flugzeugseite durchführen. Die Handhabungseinheiten (8,9) können dabei zu unterschiedlichen Werkstückbereichen fahren und dort in geeigneter Weise mit ihrem Träger (16) zugestellt werden. Figur 5 verdeutlicht hierbei mehrere Möglichkeiten an unterschiedlichen Flugzeugbereichen.

Die Handhabungseinheiten (8,9) positionieren dabei ihren Träger (16) gemeinsam am Werkstück (4) und am Prozessort. Mittels der Erfassungseinrichtung (7) werden die Position und Ausrichtung von Träger (16) und/oder Prozesswerkzeug (3) in der Ausgangsstellung und während des Prozesses und der Bewegung des Prozesswerkzeugs (3) detektiert und bedarfsweise korrigiert. Dies kann online geschehen, wobei eine entsprechend geeignete drahtlose oder leitungsgebundene Datenverbindung zwischen der Erfassungseinrichtung (7) und der Steuerung(en) der Handhabungseinrichtung(en) (2) bzw. der Handhabungseinheiten (8,9) besteht.

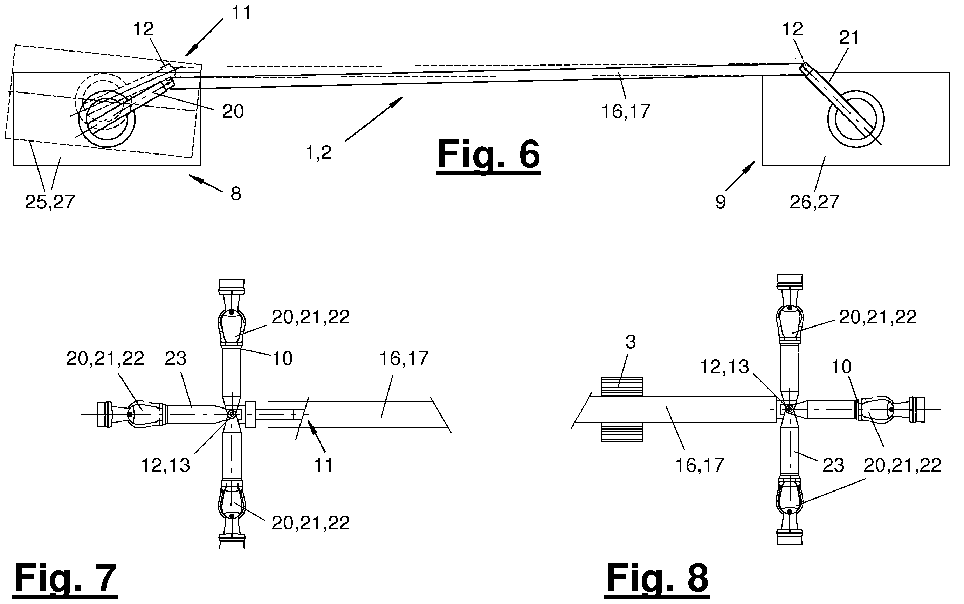

Figur 6 bis 8 verdeutlichen schematisch eine Handhabungseinrichtung (2) mit zwei Handhabungseinheiten (8,9) und einem gemeinsam gehaltenen und geführten Träger (16). Die Handhabungseinheiten (8,9) können sich in der besagten Weise zu Transport- und Zustellzwecken auf dem Untergrund synchron bewegen und in einer vorgegebenen Richtung fahren. Hierbei kann es zu den gestrichelt angedeuteten und zur Übersicht übertrieben dargestellten Abweichungen in der Position und Ausrichtung der Handhabungseinheiten (8,9) kommen. Um dabei Zwängungen in der Verbindung zwischen den Industrierobotern (20,21) und dem Träger (16) zu vermeiden, kann eine Ausgleichseinrichtung (11) vorhanden sein. Diese ist in der in Figur 7 gezeigten Variante z.B. als Anschluss (12) ausgebildet, der zumindest an einer Seite des Trägers (16) angeordnet ist und der mindestens einen translatorischen und mindestens einen rotatorischen Freiheitsgrad bietet. Hierfür kann z.B. der Anschluss (12) am Trägerende axial verschieblich und drehbar gelagert sein.

Der Anschluss (12) kann ferner eine für Zustell- und Prozesszwecken bewegliche Verbindung zwischen dem Träger (16) und dem Abtriebsglied (22) bzw. einem Ausleger (23) herstellen. Diese Verbindung kann z.B. durch ein Kreuzgelenk (13) geschaffen werden, welches ggf. in der gewünschten Stellung blockiert werden kann. Dies kann z.B. mittels einer steuerbaren Fixierung (14), z.B. einer Absteckung, erfolgen.

Figur 9 zeigt eine Variante der Ausgleichseinrichtung (11), die ein blockierbares Kugelgelenk zwischen dem Abtriebselement (22) und dem Prozesswerkzeug (3) bzw. einem zwischengeschalteten Ausleger (23) aufweist.

In Figur 10 ist eine entsprechende Ausgleichseinrichtung (11) für die Anordnung an einer von der Handhabungseinrichtung (8,9) mitgeführten Ablage (19) für einen Träger (16) dargestellt. Eine solche Ablage (19) ist z.B. am Stützgestell (28) angeordnet. Die Industrieroboter (20,21) der Handhabungseinheiten (8,9) können dabei während der gemeinsamen und synchronen Fahrt den Träger (16) an der Ablage (19) ablegen und am Einsatzort wieder aufnehmen sowie mitsamt seinem Prozesswerkzeug (3) positionieren und ausrichten.

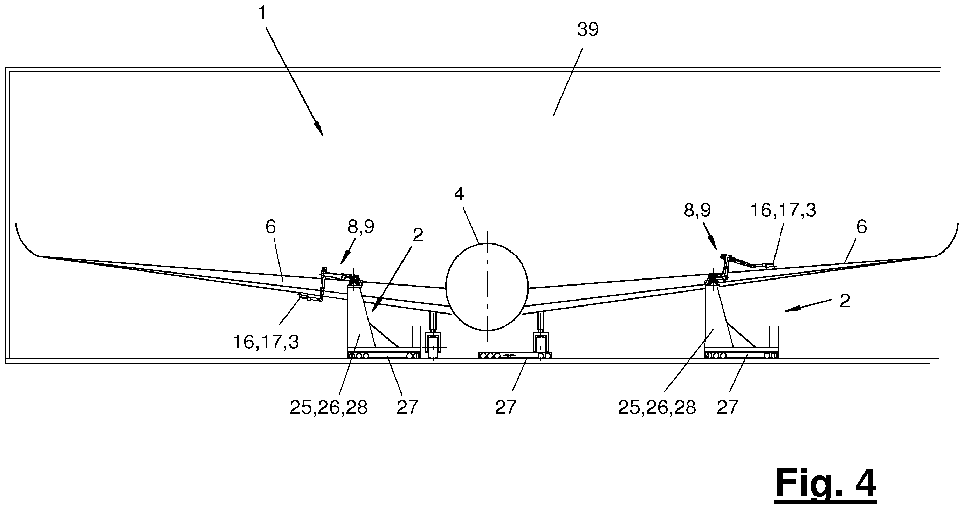

Figur 4 verdeutlicht außerdem den Fall, dass sich zwei oder mehr Handhabungseinrichtungen (2) abkoppelbare Fördermittel (27) teilen. Hierbei kann z.B. die rechte Handhabungseinrichtung (2) mit ihren Handhabungseinheiten (8,9) und deren Fördermitteln (27) am Werkstück (4) in eine prozessgünstige Position gebracht und fixiert werden, z.B. durch Absenken der Füße des Stützgestells (28). Die Fördermittel (27) können dann von den Stützgestellen (28) abkoppeln und dank ihrer niedrigen Bauweise unter dem Flugzeug (4) zur anderen Seite fahren und dort an die andere Handhabungseinrichtung (2) und deren Stützgestelle (28) ankoppeln. Die Fördermittel (27) können zum An- und Abkoppeln z.B. eine Hubbewegung ausführen. Sie können ggf. auch ein Stützgestell (28) zwischen einer angehobenen Fahrstellung und einer abgesenkten Stütz- oder Fixierstellung heben und senken. Nach Transport bzw. Zustellung der zweiten Handhabungseinrichtung (2) können die Fördermittel (27) dort verbleiben oder erneut abkoppeln und zur ersten Handhabungseinrichtung (1) zurückfahren oder andere Aufgaben wahrnehmen.

Die Industrieroboter (20,21) haben einen Arbeitsbereich von vorzugsweise mehreren Metern und können ihren gemeinsam gehaltenen Träger (16) mit dem Prozesswerkzeug (3) in mehrere vorgegebene, unterschiedliche Positionen bringen, wodurch z.B. ein Medienauftrag in mehreren Bahnen bzw. Streifen nebeneinander und über eine größere Werkstückoberfläche möglich ist. Die Fahrbewegung des Prozesswerkzeugs (3) am Träger (16) bzw. Tragbalken (17), ist hierbei die eigentliche Vorschubbewegung im Prozess. Wenn der Arbeitsbereich nicht ausreicht, können die Industrieroboter (20,21) mit den Fördermitteln (27) verfahren und in eine andere Position versetzt werden. Nach Beendigung eines Prozesses können sie außerdem zu einem anderen Einsatzort am Werkstück (4) gemäß Figur 5 verfahren werden.

In einer abgewandelten Funktionsweise können die Handhabungseinheiten (8,9), z.B. die Industrieroboter (20,21) und/oder die beweglichen Stützeinrichtungen (25,26), den Träger (16) bewegen, z.B. quer oder schräg zu seiner Längserstreckung, und dadurch eine Vorschubbewegung für den Prozess ausführen. Das Prozesswerkzeug (3) kann dabei relativ ortsfest am Träger (16) fixiert werden. In einer weiteren Abwandlung sind überlagerte und abgestimmte Vorschubbewegungen von Träger (16) und Prozesswerkzeug (3) möglich.

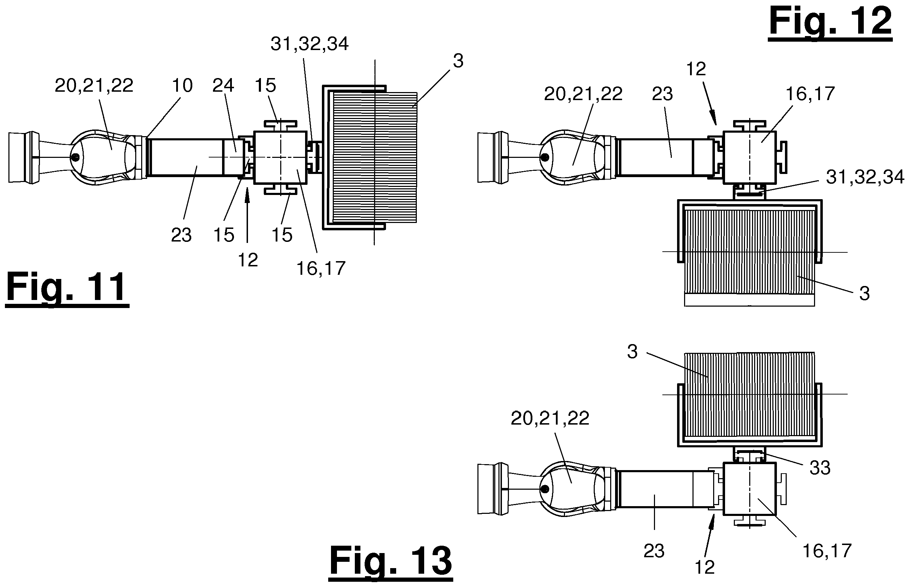

Figur 11 bis 14 verdeutlichen verschiedene Anordnungs- und Ausrichtmöglichkeiten für einen Träger (16) und ein Prozesswerkzeug (3) mittels eines Industrieroboters (20,21). Die Zeichnungen verdeutlichen außerdem verschiedene Ausbildung eines Anschlusses (12) zwischen Abtriebsglied (22) und Träger (16).

In der Ausführung von Figur 11 bis 13 kann ein Träger (16), hier z.B. wieder ein Tragbalken (17), an seinem Umfang verschiedene Anschlussmöglichkeiten haben. Sie sind bevorzugt an den Endbereichen des Trägers (16) bzw. Tragbalkens (17) angeordnet. Ein Anschluss (12) weist z.B. ein Greifmodul (15) am Träger (16) und einen steuerbaren Greifer (24) am Abtriebsglied (22) oder an einem ggf. zwischengeschalteten Ausleger (23) auf. Der Greifer (24) und die Greifmodule (15) sind formschlüssig und für eine spielfreie Verbindung aufeinander abgestimmt. Der Greifer (24) oder der Ausleger (23) kann wieder über eine Kupplung (10) bedarfsweise lösbar mit dem Industrieroboter (20,21) verbunden sein.

Am Träger (16) können ein einzelnes Greifmodul (15) oder alternativ mehrere Greifmodule (15) an verschiedenen Umfangs- oder Außenseiten angeordnet sein. Der z.B. im Querschnitt prismatische, insbesondere rechteckige Träger (16) bzw. Tragbalken (17) kann dadurch mit dem Greifer (24) in verschiedenen Drehstellungen aufgenommen werden. Das Prozesswerkzeug (3) kann dadurch bzgl. des Industrieroboters (20,21) mit dessen Abtriebsarm fluchtend nach außen oder nach unten oder nach oben gemäß Figur 11 bis 13 gerichtet werden.

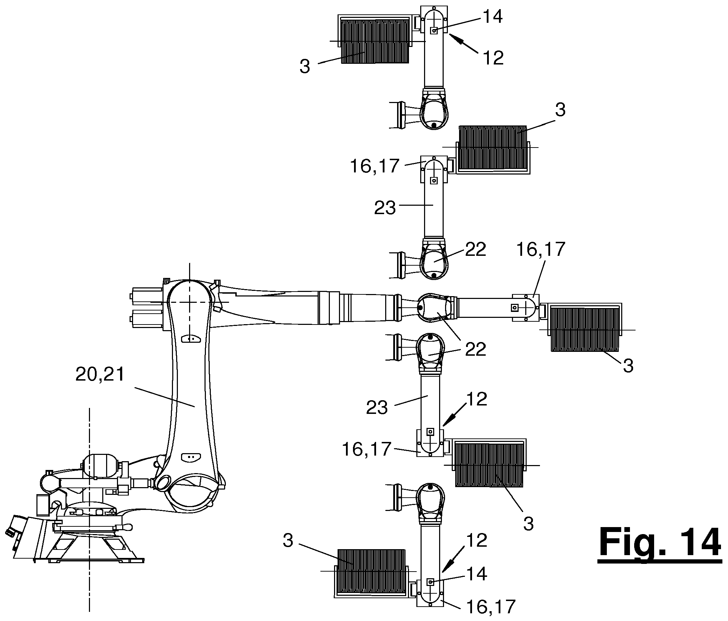

Figur 14 verdeutlicht die andere Variante des Anschlusses (12) gemäß Figur 6 bis 8. Hierbei kann der stirnseitig mit dem Anschluss (12) gegriffene Träger (16) ebenfalls in verschiedenen Drehstellungen aufgenommen werden, wobei die Drehlage mit der steuerbaren Fixierung (14), insbesondere der Absteckung, gesichert wird. Außerdem kann das Abtriebsglied (22), welches z.B. ein Bestandteil einer mehrachsigen Roboterhand ist, relativ zum Industrieroboter (20,21), insbesondere zu dessen letztem Roboterarm um eine querliegende Handachse um z.B. 90° nach oben oder unten abgeschwenkt werden, sodass sich die in Figur 14 dargestellten Positioniermöglichkeiten für den Träger (16) und das an einer Trägerseite angeordnete Prozesswerkzeug (3) ergeben.

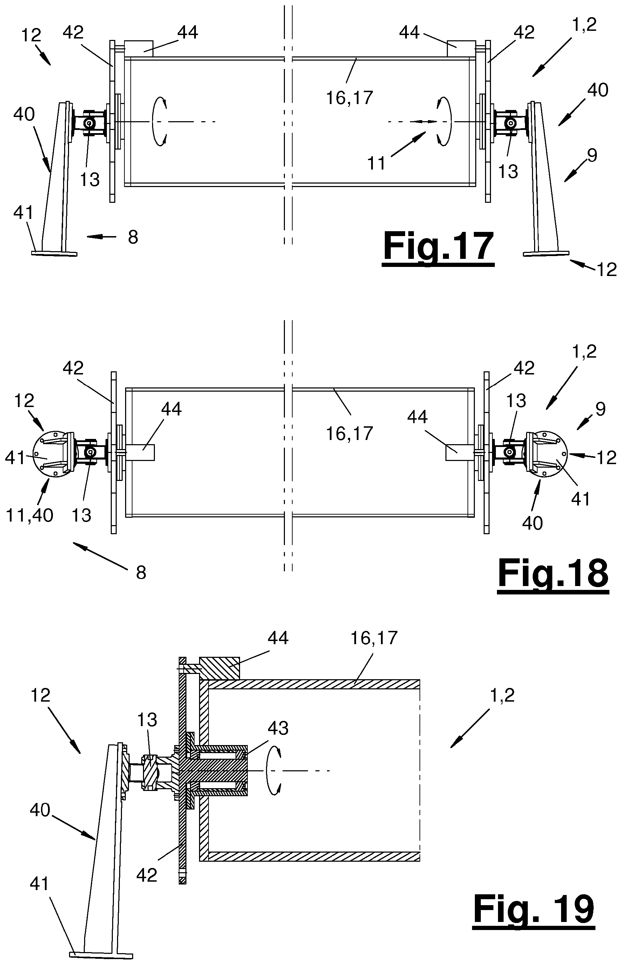

Figur 17 bis 19 zeigen eine weitere Variante des Anschlusses (12) und der Ausgleichseinrichtung (11). Der Anschluss (12) weist einen Tragstern (42) auf, der mittels eines Lagers (43) drehbar mit dem Träger (16), z.B. einem Tragbalken (17), verbunden ist. Am Träger (16) ist eine steuerbare Arretierung (44) angeordnet, welche mit dem freien Ende eines Tragsternarms in bevorzugt formschlüssigen Verriegelungseingriff tritt und die Drehstellung zwischen dem mehrarmigen, insbesondere vierarmigen Tragstern (42) und dem Träger (16) fixiert.

Der Tragstern (42) ist über ein Kreuzgelenk (13) mit einem Tragarm (40) verbunden, der durch ein Verbindungsmittel (41), z.B. einen Flansch, mit einer Handhabungseinheit (8,9), insbesondere einem Industrieroboter (20,21), verbunden werden kann. Alternativ kann der Tragarm (40) entfallen, wobei der Tragstern (42) direkt oder unter Zwischenschaltung des Kreuzgelenks (13) einer Handhabungseinheit (8,9) verbunden werden kann.

Der gezeigte Anschluss (12) mit dem Tragstern (42) und dem Lager (43) kann an beiden Stirnenden des Trägers (16) bzw. Tragbalken (17) vorhanden sein. An einem Ende kann die Lagerung zur Bildung einer Ausgleichseinrichtung (11) für den zwängungsfreien Trägertransport zusätzlich einen translatorischen Freiheitsgrad aufweisen, wobei z.B. das Drehlager (43) mit einem Schiebelager gekoppelt ist (nicht dargestellt).

Bei diesem Anschluss (12) ist es möglich, den Träger (16) um seine Längsachse zu drehen und in unterschiedlichen Drehstellungen an den Handhabungseinheiten (8,9) aufzunehmen. Zu diesem Zweck wird der Träger (16) z.B. auf einer geeigneten Unterlage abgelegt, wobei die Arretierung (44) geöffnet werden können. Anschließend kann eine Relativdrehung zwischen dem Träger (16) und den Tragarmen (40) bzw. den Handhabungseinheiten (8,9) ausgeführt werden. Hierbei kommt ein anderer Arm des Tragsterns (42) in den Bereich der Arretiereinrichtung (44) und tritt mit dieser in Eingriff.

Abwandlungen der gezeigten und beschriebenen Ausführungsformen sind in verschiedener Weise möglich. Insbesondere können die Merkmale der verschiedenen vorbeschriebenen Ausführungsbeispiele und der genannten Abwandlungen beliebig miteinander kombiniert, insbesondere auch vertauscht werden.

### BEZUGSZEICHENLISTE

- 1: Prozesseinrichtung, Auftrageinrichtung
- 2: Handhabungseinrichtung
- 3: Prozesswerkzeug, Auftragwerkzeug, Kleinroboter
- 4: Werkstück, Flugzeug
- 5: Rumpf
- 6: Flügel
- 7: Erfassungseinrichtung
- 8: Handhabungseinheit
- 9: Handhabungseinheit
- 10: Kupplung
- 11: Ausgleichseinrichtung
- 12: Anschluss
- 13: Kreuzgelenk
- 14: Fixierung, Absteckung
- 15: Greifmodul
- 16: Träger
- 17: Tragbalken
- 18: Transporteinrichtung
- 19: Ablage
- 20: Industrieroboter
- 21: Industrieroboter
- 22: Abtriebsglied, Roboterhand
- 23: Ausleger
- 24: Greifer
- 25: Stützeinrichtung beweglich
- 26: Stützeinrichtung beweglich
- 27: Fördermittel, omnidrektionales Fördergerät
- 28: Stützgestell
- 29: Bewegungseinrichtung, Hubgerät
- 30: Versorgungseinrichtung
- 31: Transportmittel, Fahrwagen
- 32: Führung
- 33: Stelleinrichtung
- 34: Anschluss
- 35: Antrieb
- 36: Medienzuführung
- 37: Messeinrichtung, Messkamera
- 38: Messmarke
- 39: Halle
- 40: Tragarm
- 41: Verbindungsmittel, Flansch
- 42: Tragstern
- 43: Lager, Drehlager
- 44: Arretierung

## Patentansprüche

1. Handhabungseinrichtung für ein Prozesswerkzeug (3), wobei die Handhabungseinrichtung (2) mehrere, insbesondere zwei, kooperierende und jeweils einen mehrachsigen, programmierbaren Industrieroboter (20,21) aufweisende Handhabungseinheiten (8,9) aufweist, die gemeinsam einen Träger (16) halten und mit abgestimmten Bewegungen führen, wobei das Prozesswerkzeug (3) an dem Träger (16) beweglich angeordnet ist und der Träger (16) eine Transporteinrichtung (18) für das Prozesswerkzeug (3) aufweist.

2. Handhabungseinrichtung nach Anspruch 1, **dadurch gekennzeichnet, dass** die Handhabungseinheiten (8,9) mit Distanz zueinander angeordnet sind und den bevorzugt als Tragbalken (17) ausgebildeten Träger (16) an unterschiedlichen Stellen, insbesondere an seinen Rand- oder Endbereichen, halten.

3. Handhabungseinrichtung nach einem der vorhergehenden Ansprüche, **dadurch gekennzeichnet, dass** die Handhabungseinheiten (8,9) ortsveränderlich, insbesondere verfahrbar, angeordnet sind.

4. Handhabungseinrichtung nach einem der vorhergehenden Ansprüche, **dadurch gekennzeichnet, dass** die Handhabungseinrichtung (2) einen Anschluss (12) mit mindestens einem rotatorischen und/oder translatorischen Freiheitsgrad zur Verbindung des Trägers (16) und einer Handhabungseinheit (8,9) aufweist.

5. Handhabungseinrichtung nach einem der vorhergehenden Ansprüche, **dadurch gekennzeichnet, dass** eine Handhabungseinheit (8,9) eine Ausgleichseinrichtung (11) zum zwängungsfreien Transport des Trägers (16) aufweist.

6. Handhabungseinrichtung nach einem der vorhergehenden Ansprüche, **dadurch gekennzeichnet, dass** die Transporteinrichtung (18) ein entlang des Trägers (16) gesteuert bewegliches Transportmittel (31), insbesondere einen Fahrwagen mit einer Führung (32), aufweist, wobei das Transportmittel (31) eine Stelleinrichtung (33) mit einer oder mehreren Stellachsen, insbesondere eine Dreheinrichtung, für das Prozesswerkzeug (3) aufweist.

7. Handhabungseinrichtung nach einem der vorhergehenden Ansprüche, **dadurch gekennzeichnet, dass** eine Handhabungseinheit (8,9) eine bewegliche Stützeinrichtung (25,26), insbesondere ein Stützgestell (28) mit einem bevorzugt omnidirektional beweglichen Fördermittel (27), für einen Industrieroboter (20,21) aufweist.

8. Prozesseinrichtung zur Durchführung von Prozessen an Werkstücken (4) oder Objekten, wobei die Prozesseinrichtung (1) eine Handhabungseinrichtung (2) für ein Prozesswerkzeug (3) aufweist, **dadurch gekennzeichnet, dass** die Handhabungseinrichtung (2) nach mindestens einem der Ansprüche 1 bis 7 ausgebildet ist.

9. Prozesseinrichtung nach Anspruch 8, **dadurch gekennzeichnet, dass** die Prozesseinrichtung (1) als Auftrageinrichtung zum Lackieren eines Werkstücks (4), insbesondere der Außenhaut von Flugzeugen, und zum Prägen und Stabilisieren, insbesondere Aushärten, des Lacks ausgebildet ist.

10. Prozesseinrichtung nach Anspruch 8 oder 9, **dadurch gekennzeichnet, dass** mehrere Handhabungseinheiten (8,9) ein gemeinsames und wechselbares Fördermittel (27) aufweisen.

11. Verfahren zum Handhaben eines Prozesswerkzeugs (3), wobei mehrere, insbesondere zwei, kooperierende und jeweils einen mehrachsigen, programmierbaren Industrieroboter (20,21) aufweisende Handhabungseinheiten (8,9) gemeinsam einen Träger (16) halten und mit abgestimmten Bewegungen führen, wobei das Prozesswerkzeug (3) an dem Träger (16) beweglich angeordnet und mittels einer Transporteinrichtung (18) bewegt wird.

12. Verfahren nach Anspruch 11, **dadurch gekennzeichnet, dass** das Prozesswerkzeug (3) von der Transporteinrichtung (18) mit einem Transportmittel (31) entlang des Trägers (16) durch Schwerkraft oder durch einen Antrieb (35) gesteuert bewegt wird.

13. Verfahren nach Anspruch 11 oder 12, **dadurch gekennzeichnet, dass** die Handhabungseinheiten (8,9) den Träger (16) und das Prozesswerkzeug (3) gemeinsam zu einem Prozessort, insbesondere einem Werkstück (4), transportieren und dort positionieren.

14. Verfahren nach einem der Ansprüche 11 bis 13, **dadurch gekennzeichnet, dass** das Verfahren für die Herstellung oder Erstbearbeitung und/oder für die Nachbearbeitung und Nachrüstung von Werkstücken (4) oder Objekten im Aerospace-Bereich, insbesondere von Flugzeugen oder anderen Flugkörpern, und/oder im Non-Aerospace-Bereich, vorgesehen und ausgebildet ist.

15. Verfahren nach Anspruch 14, **dadurch gekennzeichnet, dass** mit dem Prozesswerkzeug (3) eine Inspektion, eine Montage, ein Handling von Bauteilen, eine mechanische oder sonstige Bearbeitung einer Werkstückoberfläche oder eines Werkstücks (4), insbesondere in spanabhebender Weise durch Schleifen, Fräsen oder dgl., oder ein Fügen oder Aktivieren oder elektrisches Aufladen der Werkstückoberfläche oder des Werkstücks (4) durchgeführt wird.

## Claims

1. Handling apparatus for a processing tool (3), wherein the handling apparatus (2) has a plurality of, in particular two, cooperating handling units (8, 9) which each have a multi-axis, programmable industrial robot (20, 21) and, together, retain a carrier (16) and guide the same with coordinated movements, wherein the processing tool (3) is arranged in a movable manner on the carrier (16) and the carrier (16) has a transporting device (18) for the processing tool (3).

2. Handling apparatus according to Claim 1, **characterized in that** the handling units (8, 9) are spaced apart from one another and retain the carrier (16), designed preferably in the form of a carrying beam (17), at different locations, in particular at the peripheral or end regions thereof.

3. Handling apparatus according to either of the preceding claims, **characterized in that** the handling units (8, 9) are arranged in a mobile, in particular displaceable, manner.

4. Handling apparatus according to one of the preceding claims, **characterized in that** the handling apparatus (2) has a connection (12) with at least one degree of rotary freedom, and/or degree of translatory freedom, for connection of the carrier (16) and of a handling unit (8, 9).

5. Handling apparatus according to one of the preceding claims, **characterized in that** a handling unit (8, 9) has a compensating device (11) for constraint-free transportation of the carrier (16) .

6. Handling apparatus according to one of the preceding claims, **characterized in that** the transporting device (18) has a transporting means (31), in particular a carriage with a guide (32), which can be moved in a controlled manner along the carrier (16), wherein the transporting means (31) has an adjustment device (33) with one or more adjustment axes, in particular a rotating device, for the processing tool (3).

7. Handling apparatus according to one of the preceding claims, **characterized in that** a handling unit (8, 9) has a movable supporting device (25, 26), in particular a supporting framework (28) with a preferably omnidirectionally movable conveying means (27), for an industrial robot (20, 21).

8. Processing apparatus for carrying out processes on workpieces (4) or objects, wherein the processing apparatus (1) has a handling apparatus (2) for a processing tool (3), **characterized in that** the handling apparatus (2) is designed in accordance with at least one of Claims 1 to 7.

9. Processing apparatus according to Claim 8, **characterized in that** the processing apparatus (1) is designed in the form of an application apparatus for painting a workpiece (4), in particular the outer skin of aircraft, and for embossing and stabilizing, in particular curing, the paint.

10. Processing apparatus according to Claim 8 or 9, **characterized in that** a plurality of handling units (8, 9) have a common and interchangeable conveying means (27).

11. Method for handling a processing tool (3), wherein a plurality of, in particular two, cooperating handling units (8, 9), which each have a multi-axis, programmable industrial robot (20, 21), together retain a carrier (16) and guide the same with coordinated movements, wherein the processing tool (3) is arranged in a movable manner on the carrier (16) and is moved by means of a transporting device (18).

12. Method according to Claim 11, **characterized in that** the processing tool (3) is moved in a controlled manner by the transporting device (18), with a transporting means (31), along the carrier (16) by gravitational force or by a drive (35).

13. Method according to Claim 11 or 12, **characterized in that** the handling units (8, 9) transport the carrier (16) and the processing tool (3) together to a processing location, in particular a workpiece (4), and position them there.

14. Method according to one of Claims 11 to 13, **characterized in that** the method is provided, and designed, for the production or initial machining and/or for the follow-up machining and retrofitting of workpieces (4) or objects in the aerospace sector, in particular of aircraft or other flying objects, and/or in the non-aerospace sector.

15. Method according to Claim 14, **characterized in that** the processing tool (3) is used to carry out inspection, assembly and handling of components, mechanical or other machining of a workpiece surface or of a workpiece (4), in particular with cutting action by grinding, milling or the like, or joining or activation or electrical charging of the workpiece surface or of the workpiece (4).

## Revendications

1. Dispositif de maniement pour un outil de traitement (3), dans lequel le dispositif de maniement (2) présente plusieurs, en particulier deux, unités de maniement (8, 9) qui coopèrent et qui présentent respectivement un robot industriel multiaxe programmable (20, 21), qui maintiennent ensemble un support (16) et le guident avec des mouvements convenus, dans lequel l'outil de traitement (3) est disposé de façon mobile sur le support (16) et le support (16) présente un dispositif de transport (18) pour l'outil de traitement (3).

2. Dispositif de maniement selon la revendication 1, **caractérisé en ce que** les unités de maniement (8, 9) sont disposées à distance l'une de l'autre et maintiennent le support (16) formé de préférence par une poutre de support (17) en différents points, en particulier à ses régions de bord ou d'extrémité.

3. Dispositif de maniement selon l'une quelconque des revendications précédentes, **caractérisé en ce que** les unités de maniement (8, 9) peuvent être délocalisées, en particulier déplacées.

4. Dispositif de maniement selon l'une quelconque des revendications précédentes, **caractérisé en ce que** le dispositif de maniement (2) présente un raccord (12) avec au moins un degré de liberté en rotation et/ou en translation pour la liaison du support (16) et d'une unité de maniement (8, 9).

5. Dispositif de maniement selon l'une quelconque des revendications précédentes, **caractérisé en ce qu'**une unité de maniement (8, 9) présente un dispositif d'équilibrage (11) pour le transport sans contraintes du support (16).

6. Dispositif de maniement selon l'une quelconque des revendications précédentes, **caractérisé en ce que** le dispositif de transport (18) présente un moyen de transport (31) mobile de façon commandée le long du support (16), en particulier un chariot avec un guide (32), dans lequel le moyen de transport (31) présente un dispositif de réglage (33) avec un ou plusieurs axe(s) de réglage, en particulier un dispositif de rotation, pour l'outil de traitement (3).

7. Dispositif de maniement selon l'une quelconque des revendications précédentes, **caractérisé en ce qu'**une unité de maniement (8, 9) présente un dispositif d'appui mobile (25, 26), en particulier une charpente d'appui (28), avec un moyen de transport mobile (27) de préférence omnidirectionnel, pour un robot industriel (20, 21).

8. Dispositif de traitement pour l'exécution de traitements sur des pièces (4) ou des objets, dans lequel le dispositif de traitement (1) présente un dispositif de maniement (2) pour un outil de traitement (3), **caractérisé en ce que** le dispositif de maniement (2) est configuré selon au moins une des revendications 1 à 7.

9. Dispositif de traitement selon la revendication 8, **caractérisé en ce que** le dispositif de traitement (1) est formé par un dispositif de dépôt pour la peinture d'une pièce (4), en particulier de la peau extérieure d'avions, et pour marquer et stabiliser, en particulier pour durcir, la peinture.

10. Dispositif de traitement selon une revendication 8 ou 9, **caractérisé en ce que** plusieurs unités de maniement (8, 9) présentent un moyen de transport commun et interchangeable (27).

11. Procédé de maniement d'un outil de traitement (3), dans lequel plusieurs, en particulier deux, unités de maniement (8, 9) qui coopèrent et qui présentent respectivement un robot industriel multiaxe programmable (20, 21) maintiennent ensemble un support (16) et le guident avec des mouvements convenus, dans lequel l'outil de traitement (3) est disposé de façon mobile sur le support (16) et est déplacé au moyen d'un dispositif de transport (18).

12. Procédé selon la revendication 11, **caractérisé en ce que** l'outil de traitement (3) est déplacé par le dispositif de transport (18) avec un moyen de transport (31) le long du support (16) par la gravité ou de façon commandée par un entraînement (35).

13. Procédé selon une revendication 11 ou 12, **caractérisé en ce que** les unités de maniement (8, 9) transportent le support (16) et l'outil de traitement (3) ensemble jusqu'à un site de traitement, en particulier jusqu'à une pièce (4), et les y positionnent.

14. Procédé selon l'une quelconque des revendications 11 à 13, **caractérisé en ce que** le procédé est prévu et configuré pour la fabrication ou le premier usinage et/ou pour le ré-usinage et la retouche de pièces (4) ou d'objets dans le domaine aérospatial, en particulier des avions ou d'autres aéronefs, et/ou dans le domaine non aérospatial.

15. Procédé selon la revendication 14, **caractérisé en ce que** l'on effectue avec l'outil de traitement (3) une inspection, un montage, une manipulation de pièces, un traitement mécanique ou autre d'une surface de pièce ou d'une pièce (4), en particulier avec enlèvement de copeaux par meulage, fraisage ou similaire, ou une jonction ou une activation ou un chargement électrique de la surface de pièce ou de la pièce (4).
